# EUROPEAN PATENT SPECIFICATION

(11) **EP 4 603 813 B1**
(45) Date of publication and mention of the grant of the patent: **28.10.2026**
(21) Application number: 25153701.5
(22) Date of filing: 24.01.2025
(51) Int. Cl.: G01K 1/143, G01K 1/14, G01K 7/06, G01K 1/08

(54) **SURFACE TEMPERATURE SENSOR**
OBERFLÄCHENTEMPERATURSENSOR
CAPTEUR DE TEMPÉRATURE DE SURFACE

(30) Priority: 26.01.2024 US 202463625387 P
(43) Date of publication of application: 20.08.2025
(73) Proprietor: WIKA Alexander Wiegand SE & Co. KG, 63911 Klingenberg/Main (DE)
(72) Inventor: DELANCEY, Adam, Pearland, 77581 (US); WILKINSON, Kyle, Edmonton, T6X2J4 (CA); STAAB, Ulrich, 63599 Biebergemünd (DE); MALHOTRA, Sandeep, Houston, 77041 (US); TIER, Michael, Pearland, 77584 (US)
(74) Representative: Liedtke & Partner Patentanwälte

(56) References cited:
- US-A- 4 477 687
- US-A- 4 767 468
- US-A- 5 141 335
- US-A- 5 711 608
- US-B2- 10 288 490

## Description

### FIELD OF THE INVENTION

This invention pertains to temperature sensing technology, particularly to surface temperature sensors, and more particularly to mounting bodies for connection of sheathed, mineral insulated thermocouples onto a surface, the temperature of which is to be sensed.

### BACKGROUND OF THE INVENTION

There is a demand from many industries to accurately monitor the temperature of operating equipment in harsh environments, e.g. on the surface of pipes in heat exchangers or furnaces and other structures in industrial process plants. Sensors specifically adapted for such applications are sometimes also referred to as 'tube-skin' sensors.

The use of thermocouple sensors (hereinafter TC sensors) has widely been applied to that field, as they are known for reliability and fast response. As there are numerous different kinds of TC sensors, e.g. type K, J, E, and others, a suitable type of TC can be found for a wide range of specifications and applications.

A TC sensor comprises a set of two metal wires of different materials, that are connected to each other on one end, to form a so-called 'hot junction'. If the hot junction is exposed to a different temperature than the other ends of the wires, then a voltage can be measured between these open ends, which voltage is indicative of the temperature difference between the hot junction and the open ends of the wires. By connecting the open ends of the wires to suitable measurement circuitry, accurate temperature measurement can be achieved.

To protect the TC wires from harsh environments, so-called sheathed sensor cables are widely used in the industry. The sheath of such cable is typically made of a steel, wherein the TC wires are embedded in an insulation material within the sheath. The insulation material is usually an inorganic mineral powder. **In** applications like heat exchangers, furnaces and similar structures, the sheathed sensor cables are particularly introduced into a chamber of the structure through a sealed process connection. The sheathed sensor cable is then routed within that chamber, so that a hot junction of the TC sensor, which is usually located at the end of the sheathed sensor cable, reaches a specific surface spot, where temperature measurement is desired. That specific surface spot may also be referred to as the 'measurement location' throughout this document.

To facilitate accurate positioning of the hot junction at the desired measurement location, firm connection to the surface and protection of the TC sensor and its hot junction from the environmental conditions at that measurement location, a variety of different mounting concepts have been employed. Amongst those, the use of so-called 'V-shaped' or 'knife-edged' mounting bodies has emerged as a means for a very reliable connection of the TC sensor to a surface and also for promotion of fast response times and higher accuracy of the temperature measurement. Such a device is known, for example, from the US 5,141,335 A.

For the purpose of a concise specification of the above-mentioned prior art, as well as of the aspects and embodiments of the invention presented in following sections, terms like 'top', 'upside', 'upper' and similar wording shall be understood as referring to faces, sides or parts that are facing away from the surface, whose temperature is to be measured, or that are at least farther away from that surface than other faces, sides or parts. Accordingly, terms like 'bottom', 'downside', 'ground', 'lower' and similar wording shall be understood as referring to faces, sides or parts that are facing towards the surface, whose temperature is to be measured, or that are in direct physical contact with that surface or that are at least closer to that surface than other faces, sides or parts.

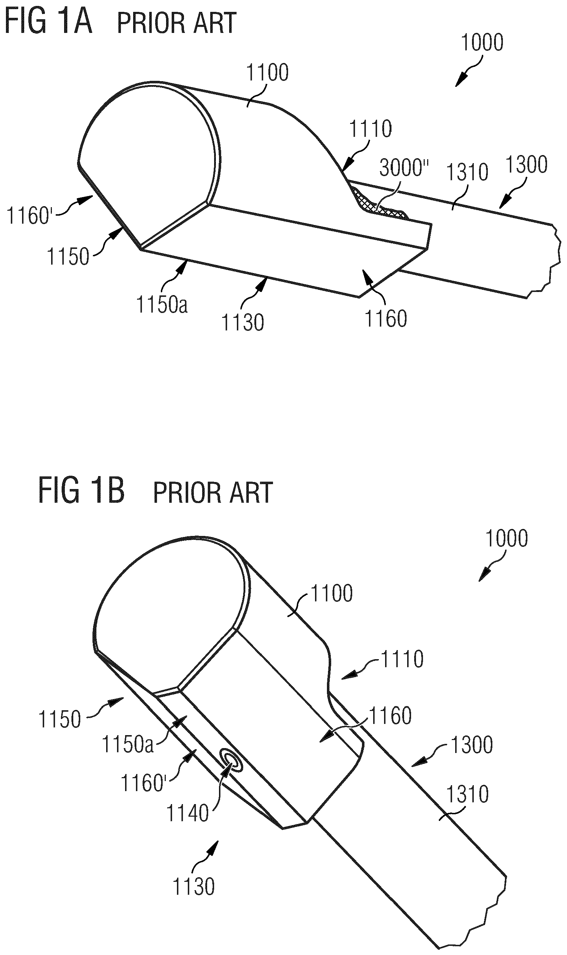

As illustrated in Figure 1A, a temperature sensor 1000 with a V-shaped or knife-edged mounting body 1100 from the prior art is characterized by a contact section 1130 formed by an apex of a ridge 1150 at a bottom side thereof, wherein that ridge 1150 is defined by two inclined faces 1160, 1160'. The faces 1160, 1160' may be parallel to a common axis, which may be referred to as a longitudinal axis of the mounting body 1100, and may be tilted by an angle, e.g. of 90 degrees to 140 degrees between each other. The faces 1160, 1160' may meet at a sharp edge, or the apex of the ridge 1150 may be formed by a rounded or flat intermediate section between the inclined faces 1160, 1160', as shown in Figure 1B. With the ridge 1150, the contact section 1130 is adapted to make a defined contact with a surface 2000 of a structure, whose temperature is to be measured.

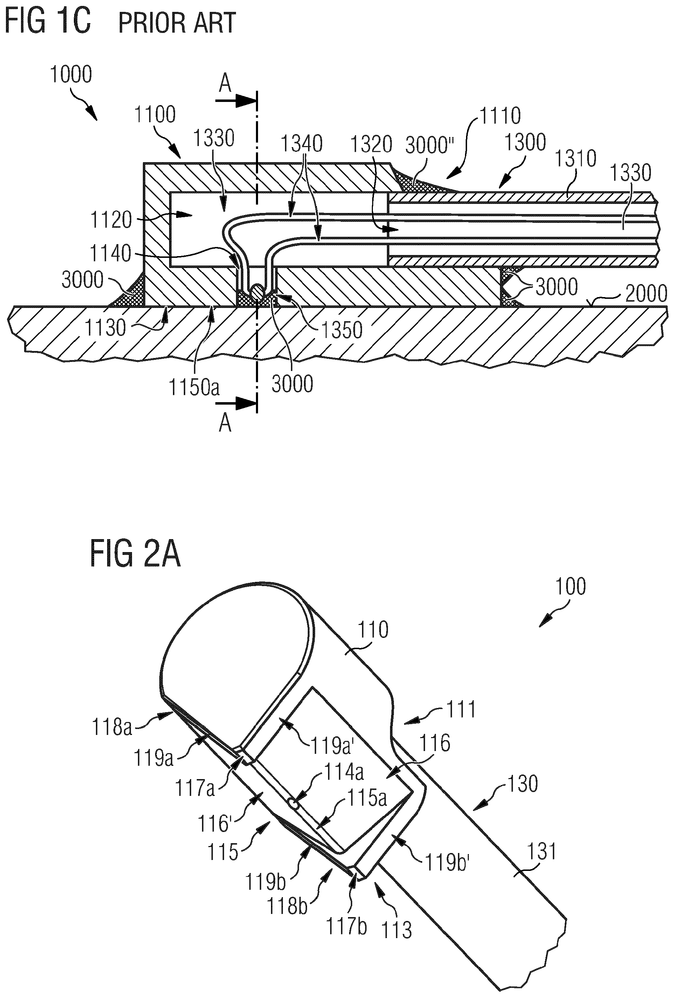

As further illustrated in Figure 1C, the V-shaped or knife-edged mounting bodies from the prior art are characterized by an insertion opening 1110, through which a sheathed TC sensor cable 1300 may be introduced into a housing chamber 1120 inside of the mounting body 1100. For reliable protection from environmental influences, the sensor cable 1300 is sealingly fixed in the insertion opening 1110 by a circumferential welding 3000. An end portion of the sheathed TC sensor cable 1300, that is inserted into the insertion opening 1110, comprises an opening 1320, so that leading ends of at least a first pair 1340 of dissimilar conductor wires extend from the opening 1320 into the housing chamber 1120. The leading ends are connected to form a first junction 1350 which is positioned inside a sensor element receptacle 1140. This sensor element receptacle 1140 is formed as a bore through the contact section 1130 into the housing chamber 1120. When the first junction 1350 is positioned inside the sensor element receptacle 1140, the latter is then filled and closed from the outside by a welding 3000, thereby also welding the first junction 1350 into the sensor element receptacle 1140, so that it is fixed in this position and in very good thermal contact with the contact section 1130 of the mounting body 1100. The mounting body 1100 is then placed onto a surface 2000 of an object, e.g. of a pipe, whose temperature is to be measured, with its contact section 1130 facing downwards to the surface 2000, so that the contact section 1130 gets into direct physical contact with the surface 2000. The mounting body 1100 is then fixedly connected to the surface 2000 by another circumferential welding 3000.

US 4 767 468 A describes a thermocouple assembly for measuring a temperature of a heat exchanger tube subjected to high temperature combustion gases and flame having a hot junction at the tube and a cold junction remotely located and connected to a readout instrument comprising, an elongated thermocouple head having an elongated heat transmitting surface adapted to be in engagement with the tube and a plurality of weld faces adjacent said surface that are adapted to be welded to the tube, and a sheathed thermocouple conductor assembly fixed to said head. The thermocouple assembly has a sheath, a pair of thermocouple conductors therein and means insulating the conductors from each other and from the sheath. The head has a sheath assembly entry opening into which the sheath extends, an opening through said surface in communication with said entry opening, a weldment filling said opening in said surface and welding the ends of the conductors together and in place and defining the hot junction at said surface, whereby the hot junction is thereby disposed at said surface of the tube.

The inventors of the present invention have noticed that measurement accuracy and long-term stability of the sensor signal as well as of the integrity of the sensor assembly itself, highly depend on the quality of the welding connection between the mounting body and the surface that it is welded onto. Furthermore, the inventors have noticed that recalibration and condition monitoring of surface temperature sensors would desirable to increase lifetime of such sensor devices and to prevent unexpected failures. The present invention and its different aspects aim to overcome the deficiencies of the prior art.

### SUMMARY OF THE INVENTION

The object of the present invention is to provide a surface temperature sensor.

According to the invention, the object is achieved with a surface temperature sensor according to claim 1.

Embodiments of the invention are subject of the dependent claims.

According the invention, a surface temperature sensor comprises a mounting body and a thermocouple sensor cable. The mounting body is made of a thermally conducting material, and comprises an insertion opening, a housing chamber accessible through the insertion opening, a contact section at a bottom side of the mounting body, and a first sensor element receptacle that is accessible from within the housing chamber and is positioned adjacent to the contact section. The thermocouple sensor cable comprises a metal sheath with an opening at an end section, an insulation material within the sheath, and a first pair of dissimilar conductor wires arranged within the sheath, wherein leading ends of the dissimilar conductor wires extend from the opening at the end section of the metal sheath, wherein the ends of the first pair of dissimilar conductor wires are connected to each other to form a first junction. The end section of the thermocouple sensor cable is inserted into the insertion opening of the mounting body and sealingly connected to it by welding. Therefore, the leading ends of the dissimilar conductor wires and the first junction protrude into the housing chamber. The first junction is positioned in the first sensor element receptacle and welded to the mounting body within the first sensor element receptacle.

In a first aspect of the invention, the mounting body further comprises at least one spacing protrusion on or adjacent to the contact section, that protrudes beyond an outer surface of the contact section. That means, the spacing protrusion projects from the outer surface of the contact section downwardly. When the surface temperature sensor is placed on a surface, whose temperature is to be measured, the spacing protrusion - as it is the part of the mounting body, which projects the farthest from the bottom side of the mounting body - is in direct physical contact with the surface, while the remaining parts of the contact section are spaced from the surface by a distance defined by the height of the spacing protrusion. In other words, a defined gap between the surface of the object or structure, whose surface temperature is to be measured, and the contact section is created by the spacing protrusion. When the mounting body is welded onto the surface, this defined gap will be filled with the welding material, thereby eliminating any gaps or air holes between the mounting body and the surface. Therefore, a very reliable, stable thermal contact between the surface and the first junction (which is welded into the sensor element receptacle at or close to the outer surface of the contact section) can be achieved. The surface temperature sensor therefore has an improved long-term stability and measurement accuracy. The risk of a low-quality welding connection is significantly reduced, as the defined gap will be fully penetrated by the welding material.

In an exemplary embodiment of the first aspect of the invention, the at least one spacing protrusion protrudes 0.02 inches to 0.13 inches (0,51 mm to 3,3 mm) beyond the outer surface of the contact section, particularly about 0.03 inches (0,762 mm). That protrusion dimension may also be referred to as the height of the spacing protrusion. The given dimensions provide for a very reliable penetration of the welding into the gap between the contact section and the surface of the object or structure.

In another exemplary embodiment of the first aspect of the invention, a height of the at least one spacing protrusion - which means the length over which the spacing protrusion protrudes from the outer surface of the contact section - is adapted to a width of the contact section - which means the distance between opposing edges of the contact section, below which the defined gap is created, that should be penetrated completely by the welding material - wherein the height of the spacing protrusion is at least 50 % and not more than 200 %, particularly not more than 150 %, of the width of the contact section. This relation provides for a very reliable penetration of the welding into the gap between the contact section and the surface of the object or structure and is adaptable to a wide range of differently sized mounting bodies for surface temperature sensors.

In another exemplary embodiment of the first aspect of the invention, the mounting body comprises at least two spacing protrusions, wherein the first sensor element receptacle is positioned between a first and a second spacing protrusion of the at least two spacing protrusions. The provision of more than one spacing protrusion can effectively reduce or eliminate the risk of a tilting of the mounting body relative to the surface (about an axis perpendicular to a straight line between the two spacing protrusions and parallel to the surface), therefore ensuring a constant, defined gap between the surface of the structure or object, and the contact section. In a further example, the first sensor element receptacle is positioned essentially in the middle of a straight line between the first and second spacing protrusions. 'Essentially' means in this context, that a deviation from the exact middle shall be not more than 25 % of the total distance between the first and second spacing protrusion. Therefore, a thorough welding penetration on both sides of the sensor element receptacle can be achieved.

In another exemplary embodiment of the first aspect of the invention, the contact section is formed by an apex of a downwardly tapered main ridge, which is defined by two inclined main faces on the mounting body, wherein the main ridge extends at least partially along a longitudinal axis of the mounting body and the first sensor element receptacle is positioned within the main ridge. The apex may be formed by a sharp edge or by a rounded or flat intermediate section between the inclined faces. Such a contact section may be referred to as 'V-shaped' or 'knife-edged', as known from the prior art. In this embodiment, the contact section has a narrow width. In light of the teaching of a preceding embodiment - namely, that the height of the spacing protrusion shall be between 50 % and 200 % of the width of the contact section for optimal welding - only a relatively small spacing protrusion is necessary in this embodiment to achieve a full penetration of the defined gap by welding material. Also, the design of the contact section according to this embodiment provides for a narrow, defined and precise thermal contact of the temperature sensor to the surface and therefore improves measurement accuracy and reduces response time.

In an exemplary advancement of this embodiment, the inclined main faces are tilted by an angle αₚᵣᵢₘ of 90 ° to 140 ° between each other.

In another exemplary advancement of this embodiment, the at least one spacing protrusion is formed by a downwardly tapered secondary ridge, which is defined by two inclined secondary faces, wherein the secondary ridge is formed on or adjacent to the main ridge. In this advancement, manufacturing of the mounting body is particularly easy and cost-efficient. In a further example of this advancement, the secondary faces are tilted by an angle α_{sec} between each other, that is smaller than or equal to the angle αₚᵣᵢₘ between the inclined main faces of the main ridge.

In another exemplary advancement of this embodiment, the main ridge comprises a sensing section that is recessed, and at least one spacing section that is either not recessed or at least less recessed than the sensing section, wherein the at least one spacing protrusion is formed by that at least one spacing section and wherein the first sensor element receptacle is positioned within the sensing section. In this advancement, manufacturing of the mounting body is also particularly easy and cost-efficient.

In another exemplary embodiment of the first aspect of the invention, the mounting body further comprises a second sensor element receptacle that is accessible from within the housing chamber and is positioned adjacent to a top side of the mounting body, and a second pair of dissimilar conductor wires is arranged within the sheath of the thermocouple sensor cable. Leading ends of this second pair of dissimilar conductor wires extend from the opening at the end section of the metal sheath, together with the leading ends of the first pair of metal wires, wherein the ends of the second pair of dissimilar conductor wires are connected to each other to form a second junction. That second junction is positioned in the second sensor element receptacle and welded to the mounting body within that second sensor element receptacle. Therefore, the second junction is embedded in the upper surface of the mounting body, which faces away from the surface of the structure and is exposed to the same atmosphere or environment, that surrounds the structure or object, whose surface temperature is to be measured. The second junction can therefore be used to measure the temperature of the upper side of the mounting body. The measurement value from this measurement can be compared to readings of an infra-red camera, that may be pointed at the surface temperature sensor's upper surface. Therefore, the temperature measurement with the second junction can be calibrated or recalibrated at any time. Furthermore, readings from the first and second junction can be compared. In normal operation, there should be a relatively constant offset between them. However, an increasing offset can indicate a damage or drift of at least one of them. If such increase is detected, the sensor can be booked for replacement at the next possible opportunity. Also, if the first junction should be damaged, the second junction may be used to estimate the surface temperature of the structure or object.

In another exemplary embodiment of the first aspect of the invention, the second sensor element receptacle is formed by a bore through the top side of the mounting body into the housing chamber. When the second junction is positioned inside the second sensor element receptacle, the latter is then filled and closed from the outside by a welding, thereby also welding the second junction into the second sensor element receptacle, so that it is fixed in this position and in very good thermal contact with the outer surface at the top of the mounting body.

In another exemplary embodiment of the first aspect of the invention, the second pair of dissimilar conductor wires comprises at least one conductor wire that is made of a material that is different from the material of both conductor wires of the first pair of dissimilar conductor wires. I.e., the second junction is of a different thermocouple type than the first junction. This embodiment provides for an increased effectiveness of this aspect of the invention, regarding its ability to detect drift or failure of one of the junctions. As junctions of different types show different drifting and deterioration characteristics, it is more likely in this embodiment, that both junctions will not drift or deteriorate in a similar way, so that the drift or deterioration of one of them or of both will very likely result in an increased offset between their respective measurement readings.

In another exemplary embodiment of the first aspect of the invention, the surface temperature sensor further comprises a positioning body with a shaped bottom side that matches a surface that the surface temperature sensor is to be mounted on, and a bridge body. The bridge body rigidly connects the positioning body and the mounting body and a bottom side of the bridge body is recessed in relation to the contact section and the shaped bottom side. As the positioning body's bottom side matches the surface of the object or structure, on which the surface temperature sensor is to be mounted on, it forms a flat, areal contact with that surface. That provides for a stable placement of the sensor on the surface and eliminates or at least reduces the risk of tilting or tipping significantly. As surface temperature sensors need to be temporarily fixed to the structure, e.g. by chain clamps, before they can be permanently fixed to it by welding, the process is further simplified: Such chain clamps (or different clamping or gripping means) can be attached to the positioning body. As the mounting body is fixedly connected to the positioning body through the bridge body, the mounting body therefore is indirectly fixed as well and can be welded to the surface. At the same time, welding of the mounting body is substantially easier, as the mounting body is not partly covered by the chain clamp or similar clamping or gripping means. Since a bottom side of the bridge body is recessed in relation to the contact section and the shaped bottom side (i.e. recesses to the bottom sides of the mounting body and the positioning body), the contact section is accessible for all around welding, even below the bridge section. Therefore, the mounting body can firmly be connected to the surface on all sides and the contact section, in particular the spot where the first sensor element receptacle is positioned in the contact section, is completely sealed off from the surrounding atmosphere by a welding seam. That may provide for an increased durability of the surface temperature sensor, and can greatly reduce detrimental environmental influences.

In another exemplary embodiment of the first aspect of the invention, the contact section of the mounting body is slightly recessed in relation to the shaped bottom side of the positioning body. Therefore, when the positioning body of the surface temperature sensor is placed on the surface, whose temperature is to be measured, the contact section of the mounting body is held spaced from the surface by a defined distance, forming a defined gap between contact section and surface. That gap can serve for the same purpose as the gap defined by the spacing protrusion according to the first aspect of the invention: when the mounting body is circumferentially welded to the surface, that gap will be filled with the welding material, thereby eliminating any gaps or air holes between the mounting body and the surface. Hence, this embodiment combines the third aspect of the invention with the beneficial effect of the first aspect, without the need to provide one or more spacing protrusions on the bottom side of the mounting body or on the contact section.

In another exemplary embodiment of the first aspect of the invention, the positioning body and the bridge body are made of the same thermally conducting material as the mounting body, e.g. stainless steel. That provides for a good protection of the device from damage and environmental influences and enables a stable rigid connection of all three body, e.g. by welding.

In another exemplary embodiment of the first aspect of the invention, the mounting body, the bridge body and the positioning body are integrally formed, e.g. permanently connected to each other by welding, or cut from one single piece. Therefore, the structure of the surface temperature sensor is very stable and durable.

In a second aspect of the invention, the mounting body further comprises a second sensor element receptacle that is accessible from within the housing chamber and is positioned adjacent to a top side of the mounting body, and a second pair of dissimilar conductor wires is arranged within the sheath of the thermocouple sensor cable. Leading ends of this second pair of dissimilar conductor wires extend from the opening at the end section of the metal sheath, together with the leading ends of the first pair of metal wires, wherein the ends of the second pair of dissimilar conductor wires are connected to each other to form a second junction. That second junction is positioned in the second sensor element receptacle and welded to the mounting body within that second sensor element receptacle. Therefore, the second junction is embedded in the upper surface of the mounting body, which faces away from the surface of the structure and is exposed to the same atmosphere or environment, that surrounds the structure or object, whose surface temperature is to be measured. The second junction can therefore be used to measure the temperature of the upper side of the mounting body. The measurement value from this measurement can be compared to readings of an infra-red camera, that may be pointed at the surface temperature sensor's upper surface. Therefore, the temperature measurement with the second junction can be calibrated or recalibrated at any time. Furthermore, readings from the first and second junction can be compared. In normal operation, there should be a relatively constant offset between them. However, an increasing offset can indicate a damage or drift of at least one of them. If such increase is detected, the sensor can be booked for replacement at the next possible opportunity. Also, if the first junction should be damaged, the second junction may be used to estimate the surface temperature of the structure or object.

In an exemplary embodiment of the second aspect of the invention, the second sensor element receptacle is formed by a bore through the top side of the mounting body into the housing chamber. When the second junction is positioned inside the second sensor element receptacle, the latter is then filled and closed from the outside by a welding, thereby also welding the second junction into the second sensor element receptacle, so that it is fixed in this position and in very good thermal contact with the outer surface at the top of the mounting body.

In another exemplary embodiment of the second aspect of the invention, the second pair of dissimilar conductor wires comprise at least one conductor wire that is made of a material that is different from the material of both conductor wires of the first pair of dissimilar conductor wires. I.e., the second junction is of a different thermocouple type than the first junction. This embodiment provides for an increased effectiveness of this aspect of the invention, regarding its ability to detect drift or failure of one of the junctions. As junctions of different types show different drifting and deterioration characteristics, it is more likely in this embodiment, that both junctions will not drift or deteriorate in a similar way, so that the drift or deterioration of one of them or of both will very likely result in an increased offset between their respective measurement readings.

In another exemplary embodiment of the second aspect of the invention, the contact section is formed by an apex of a downwardly tapered main ridge, which is defined by two inclined main faces on the mounting body, wherein the main ridge extends at least partially along a longitudinal axis of the mounting body and the first sensor element receptacle is positioned within the main ridge. The apex may be formed by a sharp edge, or by a rounded or flat intermediate section between the inclined faces. Such a contact section may be referred to as 'V-shaped' or 'knife-edged', as known from the prior art. The design of the contact section according to this embodiment provides for a narrow, defined and precise thermal contact of the temperature sensor to the surface and therefore improves measurement accuracy and reduces response time.

In a third aspect of the invention, the surface temperature sensor further comprises a positioning body with a shaped bottom side that matches a surface that the surface temperature sensor is to be mounted on, and a bridge body. The bridge body rigidly connects the positioning body and the mounting body and a bottom side of the bridge body is recessed in relation to the contact section and the shaped bottom side. As the positioning body's bottom side matches the surface of the object or structure, on which the surface temperature sensor is to be mounted on, it forms a flat, areal contact with that surface. That provides for a stable placement of the sensor on the surface and eliminates or at least reduces the risk of tilting or tipping significantly. As surface temperature sensors need to be temporarily fixed to the structure, e.g. by chain clamps, before they can be permanently fixed to it by welding, the process is further simplified: Such chain clamps (or different clamping or gripping means) can be attached to the positioning body. As the mounting body is fixedly connected to the positioning body through the bridge body, the mounting body therefore is indirectly fixed as well and can be welded to the surface. At the same time, welding of the mounting body is substantially easier, as the mounting body is not partly covered by the chain clamp or similar clamping or gripping means. Since a bottom side of the bridge body is recessed in relation to the contact section and the shaped bottom side (i.e. recesses to the bottom sides of the mounting body and the positioning body), the contact section is accessible for all around welding, even below the bridge section. Therefore, the mounting body can firmly be connected to the surface on all sides and the contact section, in particular the spot where the first sensor element receptacle is positioned in the contact section, is completely sealed off from the surrounding atmosphere by a welding seam. That may provide for an increased durability of the surface temperature sensor, and can greatly reduce detrimental environmental influences.

In an exemplary embodiment of the third aspect of the invention, the insertion opening is arranged on the mounting body, like it is the case in the first and second aspect of the invention. In a further exemplary embodiment, the insertion opening and the bridge body are arranged on opposing sides of the mounting body. For example, the mounting body may extend along a longitudinal axis between a front face and a back face, wherein the insertion opening is arranged on the front face and the bridge body is connected to the mounting body on the back face. With such a design, the surface temperature sensor can be kept small in size and can be handled more easily during installation.

However, in contrast to the first and second aspect of the invention, the surface temperature sensor according to the third aspect the invention not only comprises the mounting body, but also the bridge body and the positioning body. Therefore, the insertion opening, through which the thermocouple sensor cable may be inserted and through which the housing chamber is accessible, does not need to be arranged directly on the mounting body.

Accordingly, in another exemplary embodiment, the insertion opening is arranged on positioning body and a guiding channel extends from the opening through the positioning body and through the bridge body, into the housing chamber of the mounting body. After the end section of thermocouple sensor cable is inserted into the insertion opening and the metal sheath is carefully welded into the opening (i.e., a small welding seam is carefully formed between the sheath and the inner surrounding edge of the insertion opening) and the first pair of dissimilar conductor wires, which extend from the open end section of the cable, are routed through the guiding channel to reach the housing chamber and the first sensor element receptacle. In a further exemplary embodiment, the insertion opening is arranged on the positioning body with the lower edge of the opening nearly flush with the bottom side of the positioning body. In this embodiment, the thermocouple sensor cable can be routed basically in a straight line to the insertion opening and can enter it without needing to be bent in a step-like shape to enter an insertion opening that is spaced from the ground. Such spacing from the ground is usually necessary, as surface temperature sensors need to be welded all around the contact sections of their mounting body. If the sheathed thermocouple sensor cable would enter such a mounting body basically flush with the ground, the welding could either not be completed around the insertion opening, or there would be a high risk that the thin metal sheath is damaged during the welding. However, in this embodiment, the insertion opening is completely separated from the mounting body and therefore, there is no risk to damage it during the circumferential welding around the contact section. The straight, flush entry of the thermocouple sensor cable, in turn, simplifies handling of the surface temperature sensor during installation and reduces the risk of damage to the sensor cable through environmental influences.

In another exemplary embodiment of the third aspect of the invention, the contact section of the mounting body is slightly recessed in relation to the shaped bottom side of the positioning body. Therefore, when the positioning body of the surface temperature sensor is placed on the surface, whose temperature is to be measured, the contact section of the mounting body is held spaced from the surface by a defined distance, forming a defined gap between contact section and surface. That gap can serve for the same purpose as the gap defined by the spacing protrusion according to the first aspect of the invention: when the mounting body is circumferentially welded to the surface, that gap will be filled with the welding material, thereby eliminating any gaps or air holes between the mounting body and the surface. Hence, this embodiment combines the third aspect of the invention with the beneficial effect of the first aspect, without the need to provide one or more spacing protrusions on the bottom side of the mounting body or on the contact section.

In another exemplary embodiment of the third aspect of the invention, the positioning body and the bridge body are made from the same thermally conducting material as the mounting body, e.g. stainless steel. That provides for a good protection of the device from damage and environmental influences and enables a stable rigid connection of all three bodies, e.g. by welding.

In another exemplary embodiment of the third aspect of the invention, the mounting body, the bridge body and the positioning body are integrally formed, e.g. permanently connected to each other by welding, or cut from one single piece. Therefore, the structure of the surface temperature sensor is very stable and durable.

In an exemplary embodiment of the invention, the second aspect is combined with the first aspect of the invention, i.e., the surface temperature sensor comprises all characteristic features of the second aspect and/or of any of the above-mentioned exemplary embodiments thereof, and also comprises all characteristic features of the first aspect as described in the foregoing and/or of any of the mentioned exemplary embodiments and advancements of the first aspect. Hence, the beneficial effects and improvements over the prior art of both aspects of the invention can be combined in a single surface temperature sensor.

In another exemplary embodiment of the invention, the second aspect is combined with the third aspect of the invention, i.e. the surface temperature sensor comprises all characteristic features of the second aspect and/or of any of the above-mentioned exemplary embodiments thereof, and also comprises all characteristic features of the third aspect as described in the foregoing and/or of any of the mentioned exemplary embodiments thereof. Hence, the beneficial effects and improvements over the prior art of both aspects of the invention can be combined in a single surface temperature sensor.

In another exemplary embodiment of the invention, the first aspect is combined with the third aspect of the invention, i.e. the surface temperature sensor comprises all characteristic features of the first aspect and/or of any of the above-mentioned exemplary embodiments and advancements thereof, and also comprises all characteristic features of the third aspect as described in the foregoing and/or of any of the mentioned exemplary embodiments thereof. Hence, the beneficial effects and improvements over the prior art of both aspects of the invention can be combined in a single surface temperature sensor. However, exemplary embodiments of the third aspect of the invention, in which a defined gap between contact section and surface is already created by a recession of the contact section in relation to the shaped bottom side of the positioning body, are excluded from combinations with the first aspect, as there is no need for additional spacing protrusions in such examples.

In another exemplary embodiment of the invention, all three aspects of the invention and/or any of their exemplary embodiments (under observation of the above-mentioned exclusion of one particular exemplary embodiment of the third aspect from combination with the first aspect) and advancements are combined, therefore resulting in a single surface temperature sensor that comprises all of the abovementioned benefits and improvements over the prior art.

In an exemplary embodiment of any or all aspects of the invention, the thermally conducting material is a stainless steel, so that the first junction is well protected from environmental influences.

In another exemplary embodiment of any or all aspects of the invention, the sensor element receptacle is formed by a bore through the contact section into the housing chamber. When the first junction is positioned inside the sensor element receptacle, the latter is then filled and closed from the outside by a welding, thereby also welding the first junction into the sensor element receptacle, so that it is fixed in this position and in very good thermal contact with the contact section of the mounting body.

In another exemplary embodiment of any or all aspects of the invention, the insulation material is an inorganic mineral powder.

In another exemplary embodiment auf any of all aspects of the invention, the inside of the housing chamber and the guiding channel (if present) are filled up with an insulation material, after the first junction and second junction (if present) are placed and fixed in their respective sensor element receptacles. Therefore, short circuits between the conductors, except for the prepared first junction and second junction (if present) are prevented.

It shall be understood that in all aspects of the invention, the mounting body, and the bridge body and the positioning body (if present) may have more openings then just the one insertion opening. With such additional openings, routing and placement of the first pair and second pair (if present) of dissimilar conductors inside of the housing chamber and inside of the guiding channel (if present) can be simplified. When the junctions are each placed and fixed to their respective sensor element receptacles and the housing chamber and guiding channel (if present) are filled up with insulation material, such additional openings may eventually be covered with suitable housing caps and sealed, e.g. by welding.

Further scope of applicability of the present invention will become apparent from the detailed description given hereinafter.

### BRIEF DESCRIPTION OF THE DRAWINGS

The present invention will become more fully understood from the detailed description given herein below and the accompanying drawings which are given by way of illustration only, and thus, are not limitative of the present invention, and wherein:
- Figure 1A: schematically shows an exemplary embodiment of a surface temperature sensor from the prior art in a perspective view,
- Figure 1B: schematically shows another exemplary embodiment of a surface temperature sensor from the prior art in a perspective view,
- Figure 1C: schematically shows another exemplary embodiment of a surface temperature sensor from the prior art in a cross-sectional view,
- Figure 2A: schematically shows an exemplary embodiment of a surface temperature sensor in a perspective view,
- Figure 2B: schematically shows the embodiment of figure 2A in a side view,
- Figure 2C: schematically shows the embodiment of figure 2A and 2B in a front view,
- Figure 2D: schematically shows another exemplary embodiment of a surface temperature sensor in a front view,
- Figure 3A: schematically shows another exemplary embodiment of a surface temperature sensor in a perspective view,
- Figure 3B: schematically shows the embodiment of figure 3A in a side view,
- Figure 4A: schematically shows another exemplary embodiment of a surface temperature sensor in a perspective view,
- Figure 4B: schematically shows the embodiment of figure 4A in a side view,
- Figure 5A: schematically shows another exemplary embodiment of a surface temperature sensor in a perspective view,
- Figure 5B: schematically shows the embodiment of figure 5A in a side view,
- Figure 6A: schematically shows the embodiment from the prior art of figure 1C in a cross-sectional view,
- Figure 6B: schematically shows a section of figure 6A in an enlarged, detailed view,
- Figure 7A: schematically shows the embodiment of figure 2B in a cross-sectional view,
- Figure 7B: schematically shows a section of figure 7A in an enlarged, detailed view,
- Figure 8: schematically shows another exemplary embodiment of a surface temperature sensor in a cross-sectional view,
- Figure 9A: schematically shows another exemplary embodiment of a surface temperature sensor in a perspective view,
- Figure 9B: schematically shows another exemplary embodiment of a surface temperature sensor in a perspective view,
- Figure 9C: schematically shows the embodiment of figure 9B in a cross-sectional view,
- Figure 10A: schematically shows another exemplary embodiment of a surface temperature sensor in a side view,
- Figure 10B: schematically shows another exemplary embodiment of a surface temperature sensor in a side view,
- Figure 10C: schematically shows another exemplary embodiment of a surface temperature sensor in a side view, and
- Figure 11: schematically shows another exemplary embodiment of a surface temperature sensor in a cross-sectional view.

### DETAILED DESCRIPTION

Throughout the following detailed description, equal reference numbers are assigned to corresponding parts of all following exemplary embodiments.

Figures 1A, 1B and 1C have been described in previous sections with regard to the prior art.

Figures 2A, 2B, 3A, 3B, 4A, 4B, 5A and 5B illustrate various exemplary embodiments of a surface temperature sensor 100 according to the first aspect of the invention, wherein each figure denoted with letter A illustrates an individual exemplary embodiment of the surface temperature sensor 100 in a perspective view, and each figure denoted with letter B illustrates the respective exemplary embodiment of the surface temperature sensor 100 in a side view.

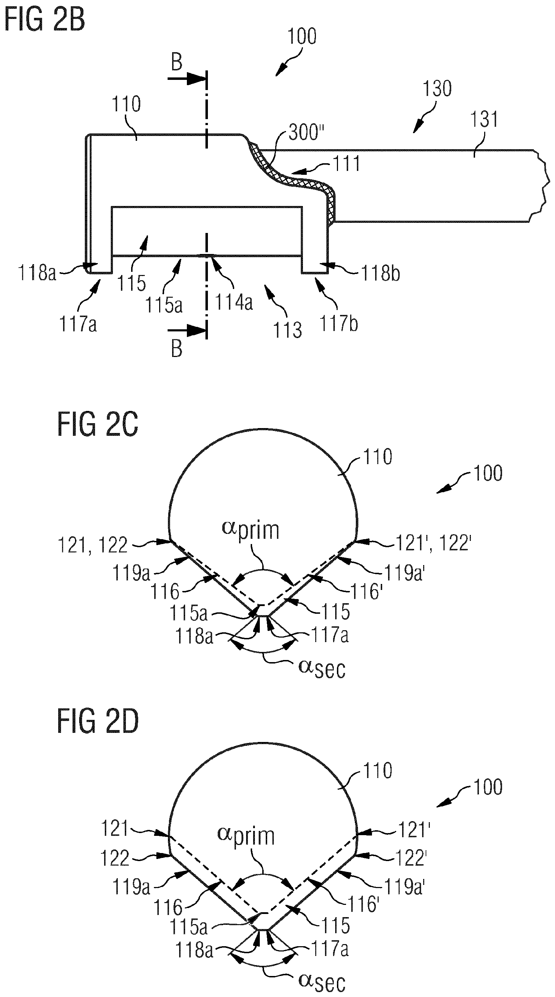

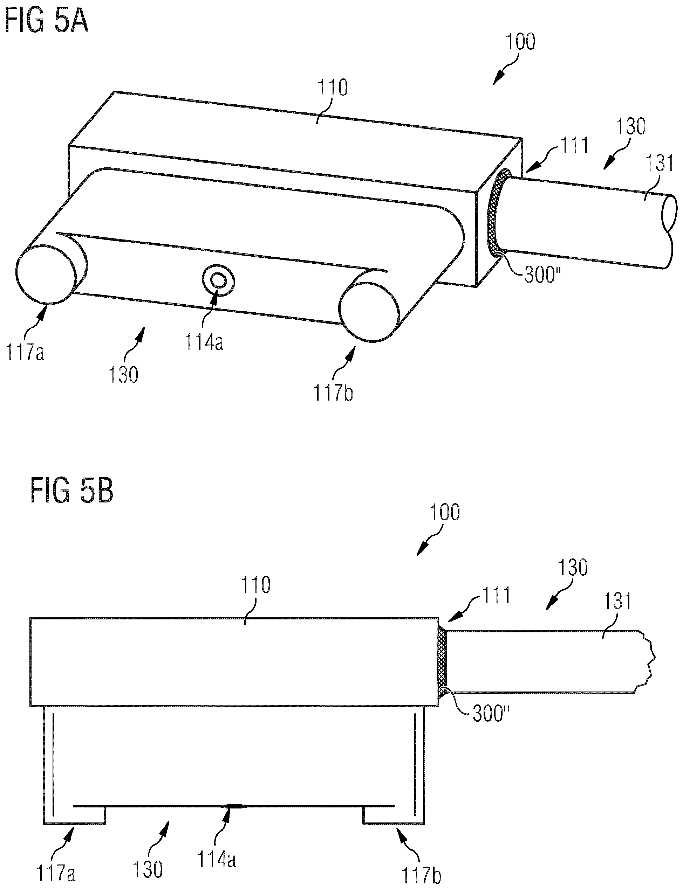

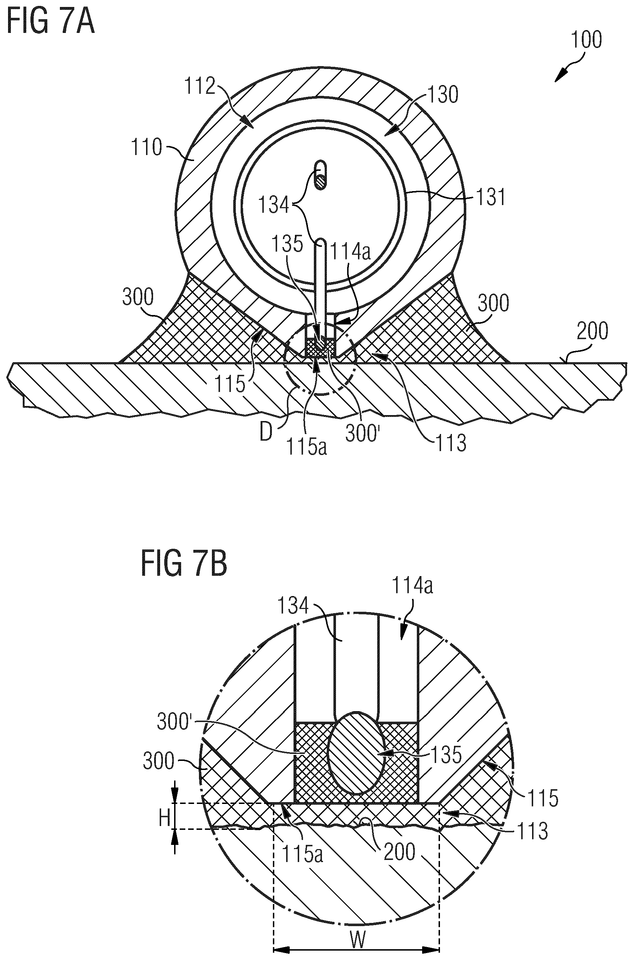

In these figures, each shown mounting body 110 comprises an insertion opening 111 through which an end section of the sheathed thermocouple sensor cable 130 is introduced into a housing chamber 112 (shown in figure 7A). A metal sheath 131 is carefully welded into the insertion opening 111 by a welding 300", such that the thin metal sheath 131 is not damaged by the welding, while the thermocouple sensor cable 130 is fixed to the mounting body 110 and the insertion opening 111 is sealed. The mounting bodies 110 shown in all figures 2A/B to 5A/B each comprise a contact section 113, that is adapted for a defined thermal contact with a surface 200 of a structure or an object, whose temperature is to be measured (surface 200 in figure 7A).

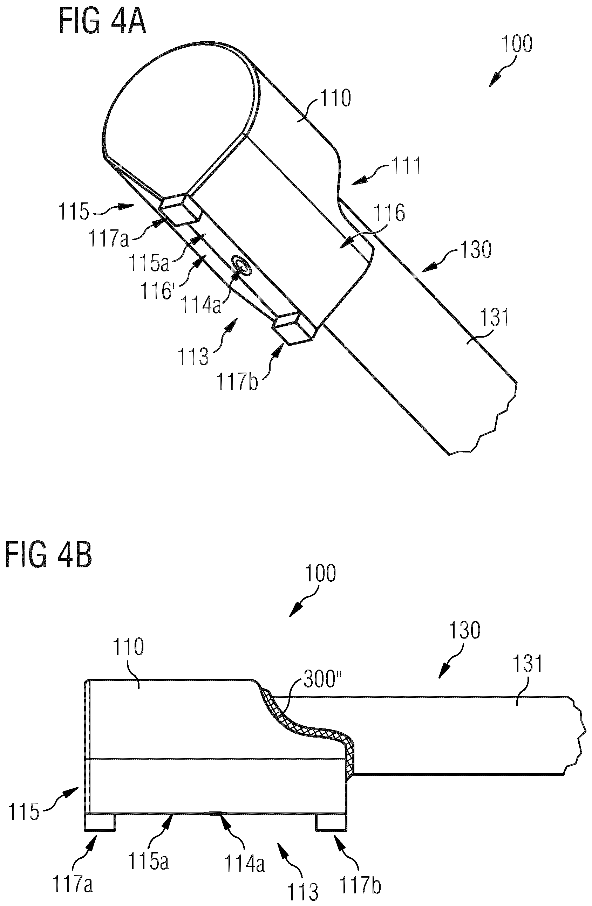

The mounting bodies 110 illustrated in figures 2A/B to 4A/B comprise a contact section 113, that is formed by an apex 115a of a downwardly tapered main ridge 115. That main ridge 150 is defined by two inclined main faces 116, 116'.

In the exemplary embodiments illustrated in figures 2A and 2B two spacing protrusions 117a, 117b are formed by two downwardly tapered secondary ridges 118a, 118b. Each secondary ridge 118a, 118b is defined by two inclined secondary faces 119a, 119a' and 119b, 119b', respectively. Between the spacing protrusions 117a, 117b, a first sensor element receptacle 114a (with a first junction 135 welded into it) is positioned in the main ridge 115.

As shown in a front view of the embodiment from figures 2A and 2B (basically opposite to the insertion opening 111) in figure 2C, the main faces 116, 116' form an angle αₚᵣᵢₘ between them, whereas the secondary faces 119a, 119a' (and secondary faces 119b, 119b' accordingly) of the embodiment in figures 2A and 2B form an angle α_{sec} between them. In this example, the angle α_{sec} is smaller than the angle αₚᵣᵢₘ and side edges 121, 121' of the inclined main faces 116, 116' are aligned with side edges 122, 122' of the secondary faces 119a, 119a'. As a result, apexes of the secondary ridges 118a, 118b protrude farther downwards than the apex 115a of the main ridge 115 to form the spacing protrusions 117a, 117b.

However, in an alternative design of this exemplary embodiment, as shown in a front view in figure 2D, the angles α_{sec} and αₚᵣᵢₘ are identical, but the main faces 116, 116' are cut deeper into the mounting body 110 and therefore define different side edges 121, 121' that are farther away from the bottom as the side edges 122, 122' formed by the secondary faces 119a, 119a' (and secondary faces 119b, 119b' accordingly). Again, as a result, the apexes of the secondary ridges 118a, 118b protrude farther downwards than the apex 115a of the main ridge 115 to form the spacing protrusions 117a, 117b.

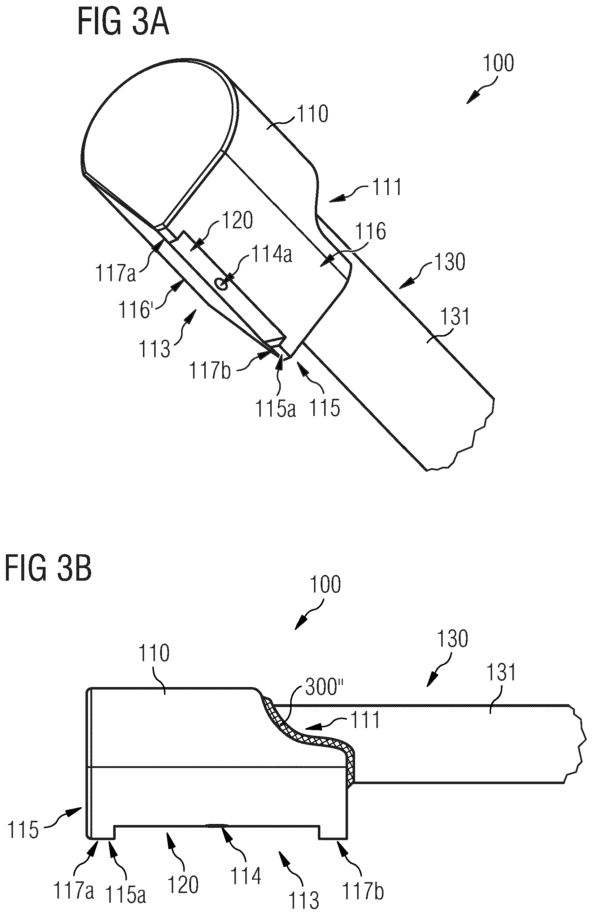

In the exemplary embodiment illustrated in figures 3A and 3B, the main ridge 115 comprises a recessed sensing section 120 in the middle of it, thereby forming two spacing protrusions 117a, 117b by the surrounding sections of the apex 115a of the main ridge 115, that are not - or at least less - recessed than the recessed sensing section 120. This embodiment is particularly easy to manufacture and therefore very cost-efficient.

In the exemplary embodiment illustrated in figures 4A and 4B, two spacing protrusions 117a, 117b in the form of spacer blocks are arranged on the apex 115a of the main ridge 115. The apex 115a is formed by a flat intermediate section, therefore the spacing protrusions 117a, 117b can be formed more easily on the apex 115a by additive methods, e.g. by welding. This embodiment can also be manufactured very easily and at low cost. However, in other exemplary embodiments, the spacing protrusions 117a, 117b may also be formed by cutting from the mounting body 110.

Figures 5A and 5B show an exemplary embodiment that mainly differs from the aforementioned ones in that it does not comprise a downwardly tapered main ridge 115. Instead, the contact section 113 is formed by a block-shaped body with not inclined side faces. Two spacing protrusions 117a, 117b protrude from a bottom face of the contact section 113, therefore forming a defined gap below a middle section of the contact section 113, where the first sensor element receptacle 114a is positioned within the mounting body 110.

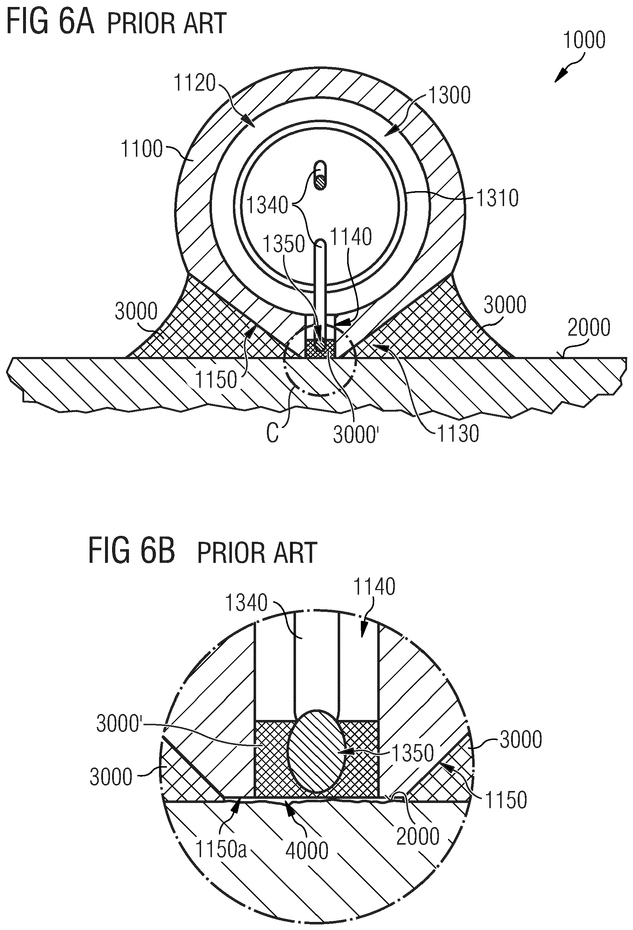

To further explain the beneficial effects, achieved by the first aspect of the invention, figures 6A and 6B illustrate the prior art and a possible deficiency thereof: Figure 6A shows a cross-sectional view of the exemplary embodiment of the surface temperature sensor 1000 from figure 1C. The sectional plane depicted in figure 6A is indicated in figure 1C with letter A. The mounting body 1100 is fixed to the surface 2000 by welding 3000. At the contact section 1300, that is formed by the apex of the downwardly tapered main ridge 1150, a thermocouple junction 1350 is arranged inside the sensor element receptacle 1140 and was fixed therein by a welding 3000' beforehand. However, as shown in figure 6B in an enlarged illustration of a section of figure 6A, that is indicated with letter C, an air gap 4000 is formed - at least in patches - between the apex 1150a of the ridge 1150 / the bottom face of the contact section 1130 and the surface 2000. That may be due to the surface roughness of the surface 2000, as illustrated herein, or due to an unintentional tilting or tipping of the mounting body 1100 during the installation process. Such air gaps 4000 degrade the thermal coupling between the thermocouple junction 1350 and the surface 2000, so that the measurement accuracy may decrease and/or response times may increase. The occurrence or at least the effect of this deficiency can be reduced, if the surface section, where the surface temperature sensor 1000 is mounted on the surface 2000, is cleaned and prepared very well before installation, and if the surface temperature sensor 1000 is placed and clamped to the surface 2000 very accurately and carefully during the installation process. Still, with the temperature sensor designs from the prior art, the problem cannot be eliminated systematically and it is also not possible to rule out the formation of such air gaps 4000 after completion of the welding process.

With the design according to the first aspect of the invention, however, the aforementioned problem can be eliminated, as illustrated in figures 7A and 7B: Figure 7A shows a cross-sectional view of the exemplary embodiment of the first aspect of the invention from figures 2A and 2B. The sectional plane depicted in figure 7A is indicated in figure 2B with letter B. The mounting body 110 of the surface temperature sensor 100 is herein illustrated as already installed on the surface 200 by welding 300. A spacing is defined between the contact section 113, i.e., the apex 115a of the downwardly tapered main ridge 115, and the surface 200 by the spacing protrusions 117a, 117b (not shown in this figure). During the welding process, this spacing (also referred to as the defined gap) is completely filled by the welding material. Therefore, no air gaps 4000 remain after the welding process and the first junction 135 has a stable thermal coupling to the surface 200, as the welding material has very good thermal conducting characteristics. Also, the first junction 135, which is positioned right at the contact section 113, fixed into the first sensor element receptacle 114a by a welding 300' that was done beforehand, is completely sealed from possibly detrimental environmental influences. For reliable full welding penetration between the contact section 130 and the surface 200, the height H of the spacing protrusions 117a, 117b is chosen to be at least 20 % and not more than 200 % of the width W of the contact section 113 (in this embodiment equal to the width of the flat intermediate section, that forms the apex 115a of the main ridge 115).

Although the above-mentioned beneficial effects are only explained in the context of the embodiment of figures 2A and 2B, it should be understood, that different embodiments of the first aspect of the invention, e.g. the alternative designs shown in figures 3A, 4A and 5A, 5B, would still result with the same positive effects.

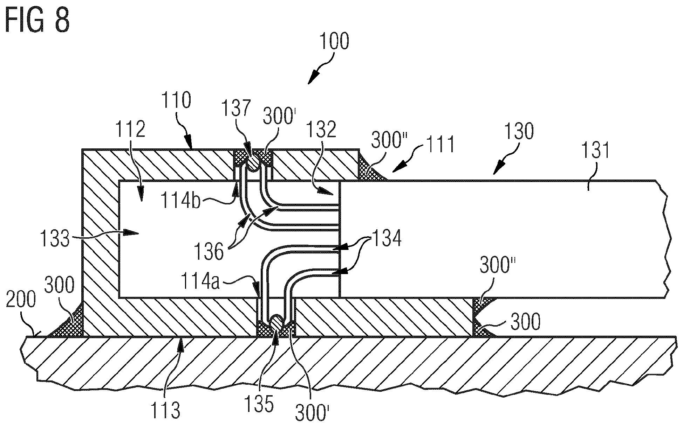

Figure 8 illustrates an exemplary embodiment of a surface temperature sensor 100 according to the second aspect of the invention in a cross-sectional side view. The thermocouple sensor cable 130 is introduced into the insertion opening 111 of the mounting body 110. It is circumferentially welded to the edge of the insertion opening 111 by welding 300" to fix it to the mounting body 110 and seal the insertion opening 111. Two pairs of dissimilar conductor wires 134, 136 extend from the opening 132 of the sheath 131 into the housing chamber 112. Leading ends of the first pair of dissimilar conductor wires 134 are connected to form the first junction 135, while leading ends of the second pair of dissimilar conductor wires 136 are connected to form the second junction 137. During manufacturing of the surface temperature sensor 100, the first pair of dissimilar conductor wires 134 is routed inside the housing chamber 112, so that the first junction 135 is placed inside the first sensor element receptacle 114a, and the second pair of dissimilar conductor wires 136 is routed inside the housing chamber 112, so that the second junction 137 is placed inside the second sensor element receptacle 114b. Both sensor element receptacles 114a, 114b are formed by bores through the walls of the mounting body 110. The first sensor element receptacle 114a is positioned on the bottom side of the mounting body 110 within the contact section 113. The second sensor element receptacle 114b is positioned on an upper side of the mounting body 110, that faces away from the ground. After the junctions 135, 137 are placed in their respective sensor element receptacles 114a, 114b, both receptacles 114a, 114b are each covered by a welding 300'. Thereby, the sensor element receptacles 114a, 114b are closed and sealed against the outside of the mounting body 110 and the junctions 135, 137 are fixed therein an in good thermal contact with surface sections of the mounting body 110 at their respective sensor element receptacle 114a, 114b. For completion of the manufacturing process, the inside of the housing chamber 112 is filled up with the same insulation material 133 as the thermocouple sensor cable 130. The surface temperature sensor 100 is installed to the surface 200 of a structure or object, whose surface temperature is to be measured, by circumferential welding 300. As the first junction 135 is arranged adjacent to the contact section 113, it is thermally coupled to the surface 200 and can be used to measure the surface temperature thereof. The second junction 137, which is arranged adjacent to the top surface of the mounting body 110, is in thermal contact with the atmosphere, surrounding the mounting body 110. It can therefore be used to measure an ambient temperature or also a surface temperature of the mounting body 110. If the surface temperature of the mounting body 110 is measured externally, e.g. with an infrared camera, the temperature measurement value from the second junction 137 can be calibrated with that. Furthermore, the temperature measurement values of the first junction 135 and second junction 137 can be compared to each other for the purpose of drift- or failure detection.

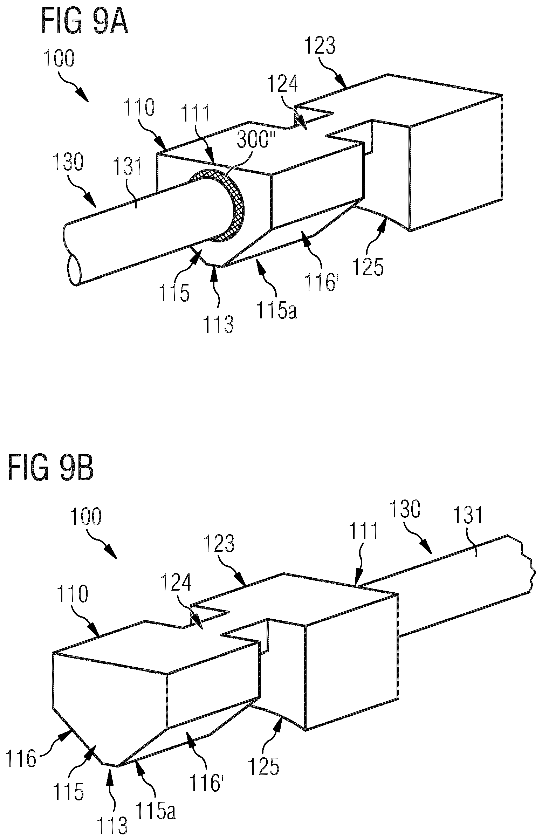

Figures 9A and 9B illustrate two exemplary embodiments of a surface temperature sensor 100 according to the third aspect of the invention in perspective views. Additionally to the mounting body 110, which is present in all embodiments of the surface temperature sensor 100, this embodiment also comprises a positioning body 123 and a bridge body 124. The positioning body 123 has a shaped bottom side 125, which is adapted to match the shape of the surface 200, to which the surface temperature sensor 100 is to be attached to. In this example, the shaped bottom side 125 is formed corresponding to the curvature of a pipe for in-line installation (i.e., a longitudinal axis of the surface temperature sensor in parallel with the pipe). Therefore, when the surface temperature sensor 100 is placed on the surface 200 of a pipe, the positioning body 123 is in flat, areal contact with the surface 200 and provides for more stability during the installation process, particularly in comparison with simple V-shaped / knife-edged mounting bodies from the prior art. A chain clamp (or other clamping means) may be attached to the positioning body 123. As the bridge body 124 provides for a rigid connection between mounting body 110 and positioning body 123, no additional clamping of the mounting body 110 is then necessary before it is welded to the surface 200 and the risk of tilting or tipping of the mounting body 110 during the welding process is greatly reduced, if not eliminated, because of the stability gained with the flat, areal contact between the positioning body 123 and the surface 200.

Figure 9A shows an exemplary embodiment wherein the insertion opening 111 is directly arranged on the mounting body 110, like it is the case with embodiments according to the other two aspects of the invention. However, figure 9B illustrates another exemplary embodiment, wherein the insertion opening 111 is arranged on a backside of the positioning body 123.

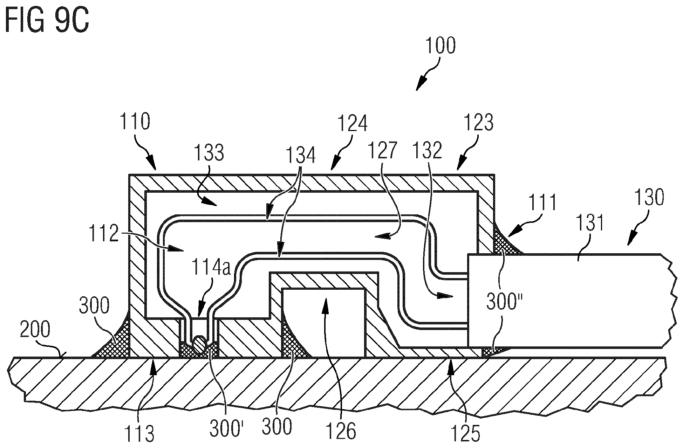

As illustrated in figure 9C, which shows the embodiment of figure 9B in in cross sectional side view, a guiding channel 127 is provided, that connects the insertion opening 111 with the housing chamber 112, so that the first pair of dissimilar conductor wires 134 can be routed from the opening 132 at the end of the metal sheath 131 to reach the first sensor element receptacle 114a. As the bottom side 126 of the bridge body 124 is recessed in relation to the contact section 113 of the mounting body 110 and the shaped bottom side 125 of the positioning body 123, the contact section's edges are accessible from all sides and the mounting body can be welded all around to the surface 200 by welding 300. The positioning body 123, however, does not need to be welded to the surface 200 completely circumferentially, since it does not need any defined, reliable thermal coupling to it, so it also does not need to be accessible from all sides. Therefore, the insertion opening 111 can be positioned such that the thermocouple sensor cable 130 can enter the insertion opening 111 almost flush with the surface 200, as shown in this figure. That makes routing of the thermocouple sensor cable 130 much easier and it is better protected from environmental influences.

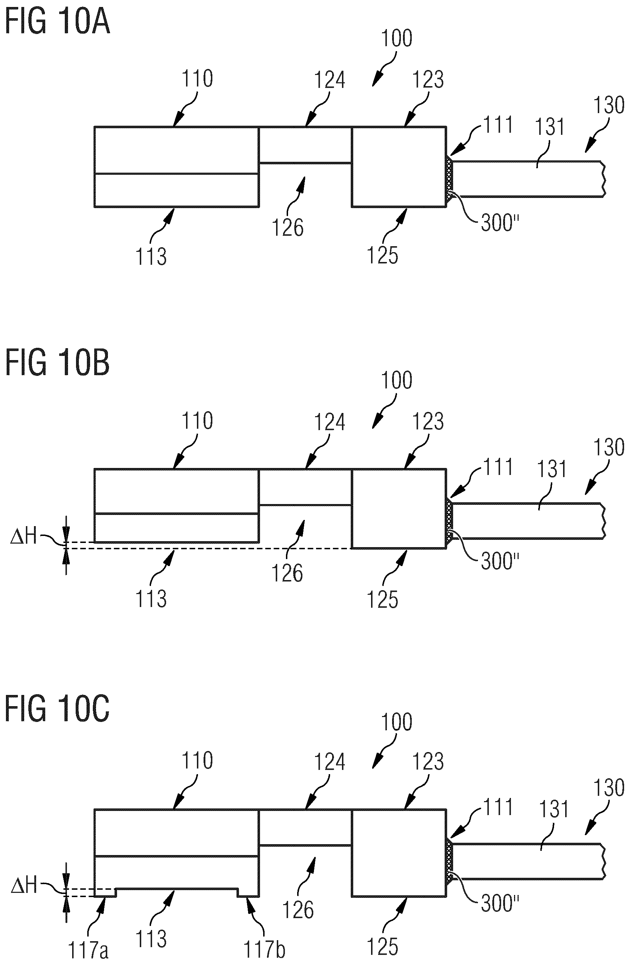

Figures 10A, 10B and 10C show further exemplary embodiments of surface temperature sensors 100 according to the third aspect of the invention in side views.

Figure 10A basically shows an embodiment that corresponds to the embodiment shown in figures 9B and 9C. Contact section 113 of the mounting body 110 and the shaped bottom side 125 of the positioning body 123 are adapted to both make contact with the surface 200 of an object or structure (not shown here).

Figure 10B, however, shows an exemplary embodiment in which the contact section 113 of the mounting body 110 is recessed in relation to the shaped bottom side 125 of the positioning body 123, so that a defined gap for full welding penetration is formed below the contact section 113, when the surface temperature sensor 100 is placed on the surface 200.

Figure 10C shows another exemplary embodiment, that is a combination of the first and third aspect of the invention: The contact section 113 is provided with spacing protrusions 117a, 117b, that provide for a defined gap between a middle section of the contact section 113 (where the first sensor element receptacle 114a and the first junction 135 are arranged in) for full welding penetration; the positioning body 123 with the shaped bottom surface 125 provides for a stable placement of the device on the surface 200, where it is to be installed, and reduces the risk of tilting or tipping during the welding process.

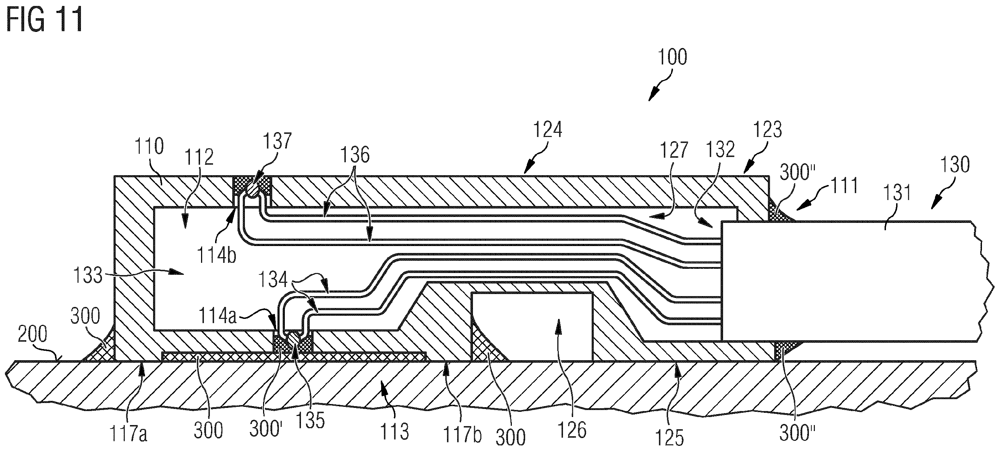

Figure 11 shows another exemplary embodiment of a surface temperature sensor 100 that combines all three aspects of the present invention: It comprises the mounting body 100 with housing chamber 112, first sensor element receptacle 114a, second sensor element receptacle 114b and contact section 113, which is provided with two spacing protrusions 117a, 117b. It further comprises positioning body 123 with shaped bottom side 125 and the bridge body 124, which rigidly connects the mounting body 110 and the positioning body 123, and has a bottom side 126 that is recessed in relation to the contact section 113 and the shaped bottom side 125. The thermocouple sensor cable 130 is introduced into the insertion opening 111, which is arranged on the positioning body 123. Welding 300" connects the end section of the sheath 131 to the positioning body 123 and seals the insertion opening 111. A first pair of dissimilar conductor wires 134 and a second pair of dissimilar conductor wires 136 extend from the opening 132 at the end of the sheath 131 and are routed through the guiding channel 127 to reach the housing chamber 112. Leading ends of the first pair of dissimilar conductor wires 134 are connected to form the first junction 135, while leading ends of the second pair of dissimilar conductor wires 136 are connected to form the second junction 137. During manufacturing of the surface temperature sensor 100, the first pair of dissimilar conductor wires 134 is routed inside the housing chamber 112, so that the first junction 135 is placed inside the first sensor element receptacle 114a, and the second pair of dissimilar conductor wires 136 is routed inside the housing chamber 112, so that the second junction 137 is placed inside the second sensor element receptacle 114b. Both sensor element receptacles 114a, 114b are formed in this example by bores through the walls of the mounting body 110. The first sensor element receptacle 114a is positioned on the bottom side of the mounting body 110 within the contact section 113. The second sensor element receptacle 114b is positioned on an upper side of the mounting body 110, that faces away from the ground. After the junctions 135, 137 are placed in their respective sensor element receptacles 114a, 114b, both receptacles 114a, 114b are each covered by a welding 300'. Thereby, the sensor element receptacles 114a, 114b are closed and sealed against the outside of the mounting body 110 and the junctions 135, 137 are fixed therein an in good thermal contact with surface sections of the mounting body 110 at their respective sensor element receptacle 114a, 114b. For completion of the manufacturing process, the inside of the housing chamber 112 and the guiding channel 127 are filled up with the same insulation material 133 as the thermocouple sensor cable 130. The surface temperature sensor 100 is installed to the surface 200 of a structure or object, whose surface temperature is to be measured, by circumferential welding 300. As the first junction 135 is arranged adjacent to the contact section 113, it is thermally coupled to the surface 200 and can be used to measure the surface temperature thereof. The second junction 137, which is arranged adjacent to the top surface of the mounting body 110, is in thermal contact with the atmosphere, surrounding the mounting body 110. Through the combination of the characteristic features of all three aspects of the present invention, the shown embodiment takes benefit of all advantageous effects, that are explained in the foregoing in the context of each single aspect and in the context of each corresponding exemplary embodiment of these.

### REFERENCE NUMBERS

- 100: Surface temperature sensor
- 110: Mounting body
- 111: Insertion opening
- 112: Housing chamber
- 113: Contact section
- 114a: First sensor element receptacle
- 114b: Second sensor element receptacle
- 115: Main ridge
- 115a: Apex of main ridge
- 116, 116': Inclined main face
- 117a, 117b: Spacing protrusion
- 118a, 118b: Secondary ridge
- 119a, 119a', 119b, 119b': Inclined secondary face
- αₚᵣᵢₘ: Angle between main faces
- α_{sec}: Angle between secondary faces
- 120: Sensing section
- 121, 121': Side edge of main faces
- 122, 122': Side edge of secondary faces
- 123: Positioning body
- 124: Bridge body
- 125: Shaped bottom side
- 126: Bottom side of bridge body
- 127: Guiding channel
- 130: Thermocouple sensor cable
- 131: Metal sheath
- 132: Opening
- 133: Insulation material
- 134: First pair of dissimilar conductor wires
- 135: First junction
- 136: Second pair of dissimilar conductor wires
- 137: Second junction
- 200: Surface
- 300, 300', 300": Welding
- 1000: Temperature sensor
- 1100: Mounting body
- 1110: Insertion opening
- 1120: Housing chamber
- 1130: Contact section
- 1140: Sensor element receptacle
- 1150: Ridge
- 1150a: Apex of ridge
- 1160, 1160': Inclined main face
- 1300: Thermocouple sensor cable
- 1310: Metal sheath
- 1320: Opening
- 1330: Inorganic insulation material
- 1340: First pair of dissimilar conductors
- 1350: Thermocouple junction
- 2000: Surface
- 3000, 3000', 3000": Welding
- 4000: Air gap

- H: Height
- W: Width

## Claims

1. **Surface temperature sensor (100),** comprising
- a mounting body (110) made of a thermally conducting material, with an insertion opening (111),
a housing chamber (112) accessible through the insertion opening (111),
a contact section (113) at a bottom side of the mounting body (110), and
a first sensor element receptacle (114a) that is accessible from within the housing chamber (112) and is positioned adjacent to the contact section (113), and
- a thermocouple sensor cable (130) with
a metal sheath (131) with an opening (132) at an end section,
an insulation material (133) within the sheath (131), and
a first pair of dissimilar conductor wires (134) arranged within the sheath (131), wherein leading ends of the dissimilar conductor wires (134) extend from the opening (132) at the end section of the metal sheath (131), wherein the ends of the first pair of dissimilar conductor wires (134) are connected to each other to form a first junction (135),
wherein the end section of the thermocouple sensor cable (130) is inserted into the insertion opening (111) of the mounting body (110) and sealingly connected to it by welding (300"),
**characterized in that**
the first junction (135) is positioned in the first sensor element receptacle (114a) and welded to the mounting body (110) within the first sensor element receptacle (114a) and
the mounting body (110) further comprises at least one spacing protrusion (117a, 117b) on or adjacent to the contact section (113), that protrudes beyond an outer surface of the contact section (113).

2. Surface temperature sensor (100) according to claim 1, wherein the at least one spacing protrusion (117a, 117b) protrudes 0.51 mm to 3.3 mm (0.02 inches to 0.13 inches) beyond the outer surface of the contact section (113).

3. Surface temperature sensor (100) according to claim 1 or claim 2, wherein that a height (H) of the at least one spacing protrusion (117a, 117b) is at least 20 % and not more than 200 % of a width (W) of the contact section (113).

4. Surface temperature sensor (100) according to one of the preceding claims,
wherein the mounting body (110) comprises at least two spacing protrusions (117a, 117b),
wherein the first sensor element receptacle (114a) is positioned between a first and a second spacing protrusion (117a, 117b) of the at least two spacing protrusions (117a, 117b), essentially in the middle of a straight line between the first and second spacing protrusions (117a, 117b).

5. Surface temperature sensor (100) according to one of the preceding claims,
wherein the contact section (113) is formed by an apex (115a) of a downwardly tapered main ridge (115), which is defined by two inclined main faces (116, 116') on the mounting body (110),
wherein the main ridge (115) extends at least partially along a longitudinal axis of the mounting body (110) and the first sensor element receptacle (114a) is positioned within the main ridge (115).

6. Surface temperature sensor (100) according to claim 5, wherein the inclined main faces (116, 116') are tilted by an angle (αₚᵣᵢₘ) of 90 ° to 140 ° between each other.

7. Surface temperature sensor (100) according to claim 5 or claim 6, wherein the at least one spacing protrusion (117a, 117b) is formed by a downwardly tapered secondary ridge (118a, 118b), which is defined by two inclined secondary faces (119a, 119a', 119b, 119b'),
wherein the secondary ridge (118a, 118b) is formed on or adjacent to the main ridge (115).

8. Surface temperature sensor (100) according to claim 7, wherein the secondary faces (119a, 119a', 119b, 119b') are tilted by an angle (α_{sec}) between each other, that is smaller than or equal to the angle (αₚᵣᵢₘ) between the inclined main faces (116, 116') of the main ridge (115).

9. Surface temperature sensor (100) according to one of the claims 5 to 8, wherein the main ridge (115) comprises
- a sensing section (120) that is recessed, and
- at least one spacing section, that is either not recessed or less recessed than the sensing section (120),
wherein the at least one spacing protrusion (117a, 117b) is formed by that at least one spacing section and
wherein the first sensor element receptacle (114a) is positioned within the sensing section (120).

10. Surface temperature sensor (100) according to one of the preceding claims, wherein
- the mounting body (110) comprises a second sensor element receptacle (114b) that is accessible from within the housing chamber (112) and is positioned adjacent to a top side of the mounting body (110), and
- the thermocouple sensor cable (130) comprises a second pair of dissimilar conductor wires (136) arranged within the sheath (131),
wherein leading ends of the second pair of dissimilar conductor wires (136) extend from the opening (132) at the end section of the metal sheath (131),
wherein the ends of the second pair of dissimilar conductor wires (136) are connected to each other to form a second junction (137), and
wherein the second junction (137) is positioned in the second sensor element receptacle (114b) and welded to the mounting body (110) within the second sensor element receptacle (114b).

11. Surface temperature sensor (100) according to claim 10, wherein the second pair of dissimilar conductor wires (136) comprise at least one conductor wire that is made of a different material than the conductor wires of the first pair of dissimilar conductor wires (134).

12. Surface temperature sensor (100) according to one of the preceding claims, comprising
- a positioning body (123) with
a shaped bottom side (125) that matches a surface (200) that the surface temperature sensor (100) is to be mounted on, and
- a bridge body (124),
wherein the bridge body (124) rigidly connects the positioning body (123) and the mounting body (110) and a bottom side (126) of the bridge body (124) is recessed in relation to the contact section (113) and the shaped bottom side (125).

13. Surface temperature sensor (100) according to claim 12, wherein the contact section (113) is slightly recessed in relation to the shaped bottom side (125) of the positioning body (123).

## Patentansprüche

1. Oberflächentemperatursensor (100), umfassend
- einen Befestigungskörper (110) aus einem wärmeleitenden Material, mit einer Einführöffnung (111),
einer Gehäusekammer (112), die durch die Einführöffnung (111) zugänglich ist, einem Kontaktabschnitt (113) an einer Unterseite des Befestigungskörpers (110), und
einer ersten Sensorelementaufnahme (114a), die von innerhalb der Gehäusekammer (112) zugänglich ist und angrenzend an den Kontaktabschnitt (113) positioniert ist, und
- ein Thermoelement-Sensorkabel (130) mit
einer Metallhülle (131) mit einer Öffnung (132) an einem Endabschnitt,
einem Isolationsmaterial (133) innerhalb der Hülle (131), und
einem ersten Paar von ungleichen Leiterdrähten (134), die innerhalb der Hülle (131) angeordnet sind,
wobei führende Enden der ungleichen Leiterdrähte (134) sich von der Öffnung (132) an dem Endabschnitt der Metallhülle (131) erstrecken, wobei die Enden des ersten Paares von ungleichen Leiterdrähten (134) miteinander verbunden sind, um einen ersten Übergang (135) zu bilden,
wobei der Endabschnitt des Thermoelement-Sensorkabels (130) in die Einführöffnung (111) des Befestigungskörpers (110) eingeführt und durch Schweißen (300") dichtend mit diesem verbunden ist,
**dadurch gekennzeichnet, dass**
der erste Übergang (135) in der ersten Sensorelementaufnahme (114a) positioniert und mit dem Befestigungskörper (110) innerhalb der ersten Sensorelementaufnahme (114a) verschweißt ist, und
der Befestigungskörper (110) ferner mindestens einen Abstandsvorsprung (117a, 117b) an dem oder angrenzend an den Kontaktabschnitt (113), der über eine Außenfläche des Kontaktabschnitts (113) vorsteht, umfasst.

2. Oberflächentemperatursensor (100) nach Anspruch 1, wobei der mindestens eine Abstandsvorsprung (117a, 117b) 0,51 mm bis 3,3 mm (0,02 Zoll bis 0,13 Zoll) über die Außenfläche des Kontaktabschnitts (113) vorsteht.

3. Oberflächentemperatursensor (100) nach Anspruch 1 oder Anspruch 2, wobei eine Höhe (H) des mindestens einen Abstandsvorsprungs (117a, 117b) mindestens 20 % und nicht mehr als 200 % einer Breite (W) des Kontaktabschnitts (113) beträgt.

4. Oberflächentemperatursensor (100) nach einem der vorhergehenden Ansprüche,
wobei der Befestigungskörper (110) mindestens zwei Abstandsvorsprünge (117a, 117b) umfasst,
wobei die erste Sensorelementaufnahme (114a) zwischen einem ersten und einem zweiten Abstandsvorsprung (117a, 117b) der mindestens zwei Abstandsvorsprünge (117a, 117b) positioniert ist, im Wesentlichen in der Mitte einer geraden Linie zwischen dem ersten und dem zweiten Abstandsvorsprung (117a, 117b).

5. Oberflächentemperatursensor (100) nach einem der vorhergehenden Ansprüche,
wobei der Kontaktabschnitt (113) durch einen Scheitelpunkt (115a) einer sich nach unten verjüngenden Hauptrippe (115) gebildet ist, die durch zwei geneigte Hauptflächen (116, 116') an dem Befestigungskörper (110) definiert ist,
wobei sich die Hauptrippe (115) zumindest teilweise entlang einer Längsachse des Befestigungskörpers (110) erstreckt und die erste Sensorelementaufnahme (114a) innerhalb der Hauptrippe (115) positioniert ist.

6. Oberflächentemperatursensor (100) nach Anspruch 5, wobei die geneigten Hauptflächen (116, 116') um einen Winkel (αₚᵣᵢₘ) von 90 ° bis 140 ° zueinander geneigt sind.

7. Oberflächentemperatursensor (100) nach Anspruch 5 oder Anspruch 6,
wobei der mindestens eine Abstandsvorsprung (117a, 117b) durch eine sich nach unten verjüngende sekundäre Rippe (118a, 118b) gebildet ist, die durch zwei geneigte sekundäre Flächen (119a, 119a', 119b, 119b') definiert ist,
wobei die sekundäre Rippe (118a, 118b) auf oder angrenzend an die Hauptrippe (115) gebildet ist.

8. Oberflächentemperatursensor (100) nach Anspruch 7, wobei die sekundären Flächen (119a, 119a', 119b, 119b') um einen Winkel (α_{sec}) zueinander geneigt sind, der kleiner als oder gleich dem Winkel (αₚᵣᵢₘ) zwischen den geneigten Hauptflächen (116, 116') der Hauptrippe (115) ist.

9. Oberflächentemperatursensor (100) nach einem der Ansprüche 5 bis 8, wobei die Hauptrippe (115) Folgendes umfasst
- einen Erfassungsabschnitt (120), der vertieft ist, und
- mindestens einen Abstandsabschnitt, der entweder nicht vertieft oder weniger vertieft als der Erfassungsabschnitt (120) ist,
wobei der mindestens eine Abstandsvorsprung (117a, 117b) durch diesen mindestens einen Abstandsabschnitt gebildet ist, und
wobei die erste Sensorelementaufnahme (114a) innerhalb des Erfassungsabschnitts (120) positioniert ist.

10. Oberflächentemperatursensor (100) nach einem der vorhergehenden Ansprüche, wobei
- der Befestigungskörper (110) eine zweite Sensorelementaufnahme (114b) umfasst, die von innerhalb der Gehäusekammer (112) zugänglich ist und angrenzend an eine Oberseite des Befestigungskörpers (110) positioniert ist, und
- das Thermoelement-Sensorkabel (130) ein zweites Paar von ungleichen Leiterdrähten (136) umfasst, die innerhalb der Hülle (131) angeordnet sind,
wobei führende Enden des zweiten Paares von ungleichen Leiterdrähten (136) sich von der Öffnung (132) an dem Endabschnitt der Metallhülle (131) erstrecken, wobei die Enden des zweiten Paares von ungleichen Leiterdrähten (136) miteinander verbunden sind, um einen zweiten Übergang (137) zu bilden, und
wobei der zweite Übergang (137) in der zweiten Sensorelementaufnahme (114b) positioniert und mit dem Befestigungskörper (110) innerhalb der zweiten Sensorelementaufnahme (114b) verschweißt ist.

11. Oberflächentemperatursensor (100) nach Anspruch 10, wobei das zweite Paar von ungleichen Leiterdrähten (136) mindestens einen Leiterdraht umfasst, der aus einem anderen Material als die Leiterdrähte des ersten Paares von ungleichen Leiterdrähten (134) hergestellt ist.

12. Oberflächentemperatursensor (100) nach einem der vorhergehenden Ansprüche, umfassend
- einen Positionierungskörper (123) mit
einer geformten Unterseite (125), die zu einer Oberfläche (200) passt, auf der der Oberflächentemperatursensor (100) montiert werden soll, und
- einen Brückenkörper (124),
wobei der Brückenkörper (124) den Positionierungskörper (123) und den Befestigungskörper (110) starr verbindet und eine Unterseite (126) des Brückenkörpers (124) in Bezug auf den Kontaktabschnitt (113) und die geformte Unterseite (125) vertieft ist.

13. Oberflächentemperatursensor (100) nach Anspruch 12, wobei der Kontaktabschnitt (113) in Bezug auf die geformte Unterseite (125) des Positionierungskörpers (123) geringfügig zurückgesetzt ist.

## Revendications

1. Capteur de température de surface (100), comprenant
- un corps de montage (110) réalisé dans un matériau thermoconducteur, avec
une ouverture d'insertion (111),
une chambre de logement (112) accessible à travers l'ouverture d'insertion (111),
une section de contact (113) sur un côté inférieur du corps de montage (110), et
un premier réceptacle d'élément de capteur (114a) qui est accessible depuis l'intérieur de la chambre de logement (112) et est positionné adjacent à la section de contact (113), et
- un câble de capteur thermocouple (130) avec
une gaine métallique (131) avec une ouverture (132) au niveau d'une partie d'extrémité,
un matériau isolant (133) à l'intérieur de la gaine (131), et
une première paire de fils conducteurs dissemblables (134) disposés à l'intérieur de la gaine (131),
dans lequel des extrémités avant des fils conducteurs dissemblables (134) s'étendent à partir de l'ouverture (132) au niveau de la section d'extrémité de la gaine métallique (131), les extrémités de la première paire de fils conducteurs dissemblables (134) étant connectées l'une à l'autre pour former une première jonction (135),
dans lequel la section d'extrémité du câble de capteur thermocouple (130) est insérée dans l'ouverture d'insertion (111) du corps de montage (110) et connectée de manière étanche à celui-ci par soudage (300"),
**caractérisé en ce que**
la première jonction (135) est positionnée dans le premier réceptacle d'élément de capteur (114a) et soudée au corps de montage (110) à l'intérieur du premier réceptacle d'élément de capteur (114a) et
le corps de montage (110) comprend en outre au moins une saillie d'espacement (117a, 117b) sur la section de contact (113) ou adjacente à celle-ci, qui fait saillie au-delà d'une surface extérieure de la section de contact (113).

2. Capteur de température de surface (100) selon la revendication 1, dans lequel la ou les saillies d'espacement (117a, 117b) font saillie de 0,51 mm à 3,3 mm (0,02 p à 0,13 p) au-delà de la surface extérieure de la section de contact (113).

3. Capteur de température de surface (100) selon la revendication 1 ou la revendication 2, dans lequel une hauteur (H) de la ou des saillies d'espacement (117a, 117b) est au moins égale à 20 % et non supérieure à 200 % d'une largeur (W) de la section de contact (113).

4. Capteur de température de surface (100) selon l'une des revendications précédentes,
dans lequel le corps de montage (110) comprend au moins deux saillies d'espacement (117a, 117b),
dans lequel le premier réceptacle d'élément de capteur (114a) est positionné entre une première et une seconde saillie d'espacement (117a, 117b) des au moins deux saillies d'espacement (117a, 117b), essentiellement au milieu d'une ligne droite entre les première et seconde saillies d'espacement (117a, 117b).

5. Capteur de température de surface (100) selon l'une des revendications précédentes,
dans lequel la section de contact (113) est formée par un sommet (115a) d'une nervure principale effilée vers le bas (115), définie par deux faces principales inclinées (116, 116') sur le corps de montage (110),
dans lequel la nervure principale (115) s'étend au moins partiellement le long d'un axe longitudinal du corps de montage (110) et le premier réceptacle d'élément de capteur (114a) est positionné à l'intérieur de la nervure principale (115).

6. Capteur de température de surface (100) selon la revendication 5, dans lequel les faces principales inclinées (116, 116') sont inclinées l'une par rapport à l'autre d'un angle (αₚᵣᵢₘ) compris entre 90° et 140°.

7. Capteur de température de surface (100) selon la revendication 5 ou la revendication 6,
dans lequel la ou les saillies d'espacement (117a, 117b) sont formées par une nervure secondaire effilée vers le bas (118a, 118b), définie par deux faces secondaires inclinées (119a, 119a', 119b, 119b'),
dans lequel la nervure secondaire (118a, 118b) est formée sur la nervure principale (115) ou est adjacente à celle-ci.

8. Capteur de température de surface (100) selon la revendication 7, dans lequel les faces secondaires (119a, 119a', 119b, 119b') sont inclinées l'une par rapport à l'autre d'un angle (α_{sec}) inférieur ou égal à l'angle (αₚᵣᵢₘ) entre les faces principales inclinées (116, 116') de la nervure principale (115).

9. Capteur de température de surface (100) selon l'une des revendications 5 à 8, dans lequel la nervure principale (115) comprend
- une section de détection (120) qui est évidée, et
- au moins une section d'espacement, qui est non évidée ou moins évidée que la section de détection (120),
dans lequel la ou les saillies d'espacement (117a, 117b) sont formées par cette ou ces sections d'espacement et
dans lequel le premier réceptacle d'élément de capteur (114a) est positionné à l'intérieur de la section de détection (120).

10. Capteur de température de surface (100) selon l'une quelconque des revendications précédentes, dans lequel
- le corps de montage (110) comprend un second réceptacle d'élément de capteur (114b) accessible depuis l'intérieur de la chambre de logement (112) et positionné de manière adjacente à un côté supérieur du corps de montage (110), et
- le câble de capteur thermocouple (130) comprend une seconde paire de fils conducteurs dissemblables (136) disposés à l'intérieur de la gaine (131),
dans lequel des extrémités avant de la seconde paire de fils conducteurs dissemblables (136) s'étendent à partir de l'ouverture (132) au niveau de la section d'extrémité de la gaine métallique (131),
dans lequel les extrémités de la seconde paire de fils conducteurs dissemblables (136) sont connectées l'une à l'autre pour former une seconde jonction (137), et dans lequel la seconde jonction (137) est positionnée dans le second réceptacle d'élément de capteur (114b) et soudée au corps de montage (110) à l'intérieur du second réceptacle d'élément de capteur (114b).

11. Capteur de température de surface (100) selon la revendication 10, dans lequel la seconde paire de fils conducteurs dissemblables (136) comprend au moins un fil conducteur réalisé dans un matériau différent des fils conducteurs de la première paire de fils conducteurs dissemblables (134).

12. Capteur de température de surface (100) selon l'une des revendications précédentes, comprenant
- un corps de positionnement (123) avec
un côté inférieur profilé (125) qui correspond à une surface (200) sur laquelle le capteur de température de surface (100) doit être monté, et
- un corps de pont (124),
dans lequel le corps de pont (124) relie de façon rigide le corps de positionnement (123) et le corps de montage (110) et un côté inférieur (126) du corps de pont (124) est évidé par rapport à la section de contact (113) et au côté inférieur profilé (125).

13. Capteur de température de surface (100) selon la revendication 12, dans lequel la section de contact (113) est légèrement évidée par rapport au côté inférieur profilé (125) du corps de positionnement (123).
